# EUROPEAN PATENT SPECIFICATION

(11) **EP 3 868 540 B1**
(45) Date of publication and mention of the grant of the patent: **13.09.2023**
(21) Application number: 20158356.4
(22) Date of filing: 19.02.2020
(51) Int. Cl.: B29C 45/00, B29C 45/16, D06F 37/26, B29K 105/26, B29L 31/00

(54) **METHOD FOR PRODUCING A COMPONENT FOR A WATER BEARING APPLIANCE AND COMPONENT OBTAINED WITH SUCH METHOD**
VERFAHREN ZUR HERSTELLUNG EINER KOMPONENTE FÜR EIN WASSERFÜHRENDES GERÄT UND MIT SOLCH EINEM VERFAHREN HERGESTELLTE KOMPONENTE
PROCÉDÉ DE PRODUCTION D'UN COMPOSANT POUR UN APPAREIL À CIRCULATION D'EAU ET COMPOSANT OBTENU SELON CE PROCÉDÉ

(43) Date of publication of application: 25.08.2021
(73) Proprietor: ELECTROLUX APPLIANCES AKTIEBOLAG, 105 45 Stockholm (SE)
(72) Inventor: SANITA', Massimo, 33080 Porcia (IT); CREMA, Luca, 33080 Porcia (IT)
(74) Representative: Electrolux Group Patents

(56) References cited:
- EP-A1- 0 605 914
- EP-A1- 0 755 729
- EP-A2- 1 825 984
- DE-A1- 4 033 298
- FR-A- 1 411 841
- JP-A- 2001 225 353
- US-A1- 2006 249 216
- US-A1- 2007 096 364
- "HONDA DEVELOPS BUMPER-TO-BUMPER RECYCLING TECHNOLOGY", AUTOMOTIVE ENGINEERING, SOCIETY OF AUTOMOTIVE ENGINEERS. WARRENDALE, US, vol. 104, no. 6, 1 June 1996 (1996-06-01), pages 77-79, XP000599060, ISSN: 0098-2571

## Description

The present invention concerns the production of components for water bearing appliances, in particular components for laundry or dish washing machines or driers.

Specifically, the invention relates to a method for producing component made of polymeric material for washing machines, in particular laundry or dish washing machines.

### BACKGROUND ART

Nowadays the use of plastic components in water bearing appliances such as laundry washing machines or laundry washing-drying machines or driers or dish washing machines, is widespread.

Components made of plastic typically comprise washing tubs, external casings of the machines or part thereof, like for example a user control panel, a filter door, a door frame, etc.

Known plastic components used in such machines are made of recycled plastic, i.e. waste plastic processed for reuse.

However, components made of recycled plastic may worsen the aesthetic appearance of the components themselves and/or negatively affect mechanical properties compare to components made of not recycled plastic.

Nevertheless, all efforts aimed at using recycled materials are highly appreciated. JP2001225353A discloses an injection-molded part consists of first and second layers respectively comprising resin materials mutually different in physical values and the second layer is parallelly injected only for a definite time during the injection of the first layer to perform molding so as to wrap the second layer in the first layer.

EP1825984A2 discloses a WC seat or cover including a core and an outer casing. The parts are produced sequentially or simultaneously in an injection mold. The core material has less enthalpy than the casing. The casing and core materials are introduced into the injection mold using a sandwich plate with two associated injection molding units.

EP0755729A1 discloses a process for manufacturing of products by recovering of waste materials having high specific weight, such as the cheap rolled sand. Process comprises a first step in which such waste materials are riddled by separating the particles with grains having a larger size, a second step in which the waste materials are mixed in a specific extruder with the coating materials and bonding materials, in a way that such waste materials are included homogeneously on the other materials, for being subsequently moulded inside molds of conventional type.

It is an object of the invention to optimize aesthetics and/or mechanics characteristics of plastic components for water bearing appliances on the base of the type of plastic material used in the producing process.

It is another object of the invention to implement a water bearing appliance component which has reduced production cost compared to known water bearing appliance components.

It is a further object of the invention to implement a water bearing appliance that reduces the environmental impact in terms of plastic materials used for its production.

### DISCLOSURE OF INVENTION

Applicant has found that by providing a method for producing a component for a water bearing appliance comprising a step of injecting a not recycled polymeric material in a mould and a subsequent step of injecting a recycled polymeric material into the mould, it is possible to reach the mentioned objects.

In a first aspect thereof the present invention relates, therefore, to a method for producing a component for a water bearing appliance, wherein the method comprises the steps of:
- injecting from at least one injection point a first not recycled polymeric material into a cavity of a mould for a first time so that said first not recycled polymeric material reaches internal surfaces of said mould and at least partially solidifies to form an external solidified layer;
- injecting from said at least one injection point, after said first time, a second recycled polymeric material into said mould for a second time so that said second recycled polymeric material fills the core of said cavity and pushes the first not recycled polymeric material not jet solidified.

Advantageously, the component of the invention may be manufactured with low cost thanks to the use of a recycled material.

Still advantageously, the use of recycled materials to produce the component reduces the environmental impact in terms of plastic materials consumption and in terms of re-use/recycling of waste plastic materials.

In a preferred embodiment of the invention, the second recycled polymeric material pushes the first not recycled polymeric material not jet solidified so that the first not recycled polymeric material reaches all remaining internal surfaces of the mould where at least partially solidifies and forms an external solidified layer; in other words, the external surface of the component is completely constituted by the first not recycled polymeric material and the first not recycled polymeric material completely covers the second recycled polymeric material.

In a different preferred embodiment of the invention, the second recycled polymeric material pushes the first not recycled polymeric material not jet solidified so that the first not recycled polymeric material reaches some remaining internal surfaces of the mould where at least partially solidifies and forms an external solidified layer and so that the second recycled polymeric material reaches all remaining internal surfaces of the mould where at least partially solidifies and forms an external solidified layer; in other words the external surface of the component is at least partially constituted by the first not recycled polymeric material and the first not recycled polymeric material at least partially covers the second recycled polymeric material.

According to a preferred embodiment of the invention, the first time of injection is set so that the first not recycled polymeric material reaches all internal surfaces of the mould, in other words, the external surface of the component is completely constituted by the first not recycled polymeric material and the first not recycled polymeric material completely covers the second recycled polymeric material. Advantageously, the aesthetic appearance of the component is significantly improved thanks to the use of a not recycled material, namely the external layer of first polymeric material.

Preferably, the first not recycled polymeric material and/or the second recycled polymeric material comprises polymers.

In a preferred embodiment of the invention, the first not recycled polymeric material and/or the second recycled polymeric material comprises a thermoplastic material.

Preferably, the recycled material derives from post-consumer plastic and/or post-industrial plastic materials.

In a preferred embodiment of the invention, said recycled material comprises a polymeric material comprising one or more chemical elements of the group comprising the following chemical elements: Lead; Cadmium; Mercury; Hexavalent Chromium; Bromine; Antimony; Arsenic; wherein said one or more chemical elements can be found in a quantity inside said recycled material above, or equal to, a minimum threshold.

Preferably, said minimum threshold for Lead is 7 ppm and/or said minimum threshold for Cadmium is 5 ppm and/or said minimum threshold for Mercury is 0.01 ppm and/or said minimum threshold for Hexavalent Chromium is 10 ppm and/or said minimum threshold for Bromine is 5 ppm and/or said minimum threshold for Antimony is 5 ppm and/or said minimum threshold for Arsenic is 5 ppm.

In a preferred embodiment of the invention, said one or more chemical elements can be found in a quantity inside said recycled material below, or equal to, a maximum threshold.

When the recycled material derives from polyolefin polymers, said maximum threshold for Lead is 60 ppm and/or said maximum threshold for Cadmium is 20 ppm and/or said maximum threshold for Mercury is 0.5 ppm and/or said maximum threshold for Hexavalent Chromium is 20 ppm and/or said maximum threshold for Bromine is 60 ppm and/or said maximum threshold for Antimony is 50 ppm and/or said maximum threshold for Arsenic is 50 ppm.

When the recycled material derives from Styrenic polymers, said maximum threshold for Lead is 90 ppm and/or said maximum threshold for Cadmium is 40 ppm and/or said maximum threshold for Mercury is 10 ppm and/or said maximum threshold for Hexavalent Chromium is 100 ppm and/or said maximum threshold for Bromine is 100 ppm and/or said maximum threshold for Antimony is 200 ppm and/or said maximum threshold for Arsenic is 200 ppm. Advantageously, impurity chemical elements falling within these maximum thresholds guarantee a good standard in term of mechanical properties (stiffness, strength, etc) to the component.

Said method carries out a co-injection moulding process wherein the first polymeric material and the second polymeric material are injected, one after the other, into the same mould.

Advantageously, co-injection moulding process provides a cost-effective solution when two materials needs to be linked one to the other.

In a further aspect thereof, the present invention concerns a component for a water bearing appliance obtained by the method above described.

Preferably, the component of the invention is one of: a tub of said water bearing appliance, a casing component of said water bearing appliance a control panel of said water bearing appliance.

According to the invention, the water bearing appliance is preferably a water bearing household appliance, more preferably a laundry washing machine or a laundry washing-drying machine or a drier or a dish washing machine.

### BRIEF DESCRIPTION OF THE DRAWINGS

Further characteristics and advantages of the present invention will be highlighted in greater detail in the following detailed description of preferred embodiments, provided with reference to the enclosed drawings. In the drawings, corresponding characteristics and/or components are identified by the same reference numbers. In particular:
- Figure 1 shows a perspective view of a component realized with a method according to a preferred embodiment of the invention;

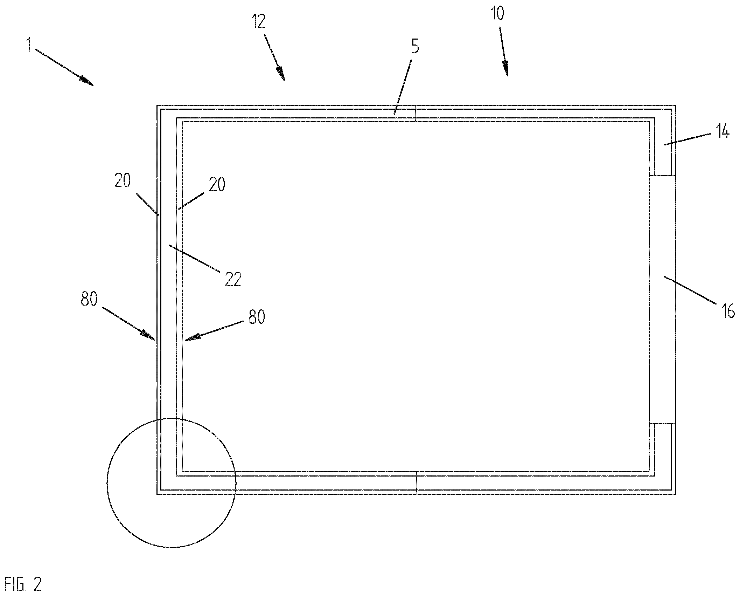

- Figure 2 is a cross section along line II°-II° of figure 1;
- Figure 3 is an enlarged view of a detail of figure 2;
- Figure 4 shows a mould used to produce a component according to the invention;
- Figure 5 shows a first phase for producing a component using the mould of figure 4 according to the invention;
- Figure 6 shows a second phase for producing a component using the mould of figure 4 according to the invention;
- Figure 7 shows a final phase for producing a component using the mould of figure 4 according to the invention;
- Figure 8 shows a perspective view of a further component realized with a method according to a preferred embodiment of the invention;
- Figure 9 is a cross section along line IX°-IX° of figure 8;
- Figure 10 is an enlarged view of a detail of figure 9;
- Figure 11 shows a mould used to produce the component of figure 9;
- Figures 12 to 14 show phases for producing the component of figure 8 using the mould of figure 11;
- Figure 15 shows a further embodiment of figure 9 illustrating a component realized with a method according to a further embodiment of the invention;
- Figure 16 is an enlarged view of a detail of figure 15;
- Figures 17 to 19 show phases for producing the component of figure 15 using the mould of figure 11;
- Figure 20 shows a further embodiment of the component of Figure 1;
- Figure 21 the component of Figure 20 from another point of view;
- Figure 22 is a cross section along line XXII°-XXII° of figure 20;
- Figure 23 shows a further embodiment of the component of Figure 8;
- Figure 24 is a cross section along line XXIV°-XXIV° of figure 23;
- Figure 25 shows a further embodiment of the component of Figure 8;
- Figure 26 is a cross section along line XXVI°-XXVI° of figure 25.
- Figure 26A is an enlarged view of a detail of figure 26.

### DETAILED DESCRIPTION OF A PREFERRED EMBODIMENT OF THE INVENTION

The present invention has proved to be particularly advantageous to produce a component in a laundry washing machines, as described below. It should in any case be underlined that the present invention is not limited to laundry washing machines. On the contrary, the present invention can be conveniently applied to any component for water bearing appliances such as laundry washing machines or laundry washing-drying machines or driers or dish washing machines.

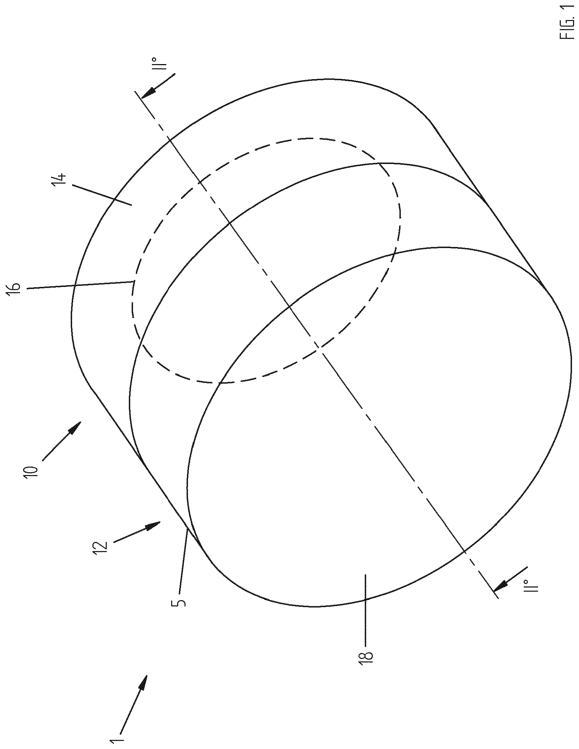

With reference to Figure 1 a preferred embodiment of a component 1 realized with a method according to the invention is shown. The component 1 is preferably a washing tub 1.

The washing tub 1 preferably refers to a washing tub 1 of a laundry washing machine that encloses a rotatable washing drum (not shown) wherein laundry can be loaded to be submitted to a washing process.

The washing tub 1 preferably has a substantially cylindrical-shaped tubular body 5.

The washing tub 1 preferably comprises a first hemi-shell 10, or front hemi-shell 10, and a second hemi-shell 12, or rear hemi-shell 12, structured for being reciprocally coupled to form the washing tub 1.

The front hemi-shell 10 of the washing tub 1 preferably comprises a front wall 14 provided with a front mouth 16.

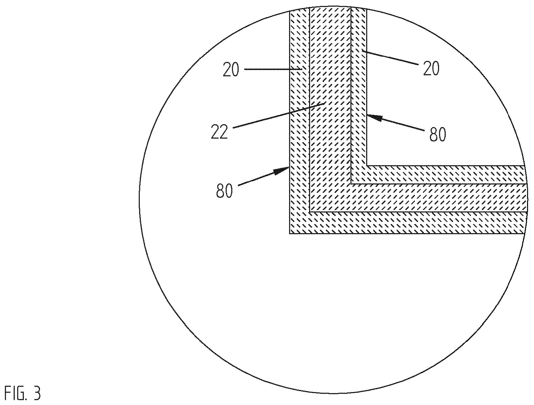

The rear hemi-shell 12 of the washing tub 1 preferably comprises a rear wall 18. According to an aspect of the invention, the washing tub 1 preferably comprises a first not recycled polymeric material 20 and a second recycled polymeric material 22, as better illustrated in figure 3.

The first not recycled polymeric material 20 constitutes the external surface 80 of the component 1 and completely covers the second recycled polymeric material 22.

The second recycled polymeric material 22 constitutes the core of the component 1 and is completely surrounded by the first not recycled polymeric material 20.

The component 1 is preferably obtained through a continuous injection moulding process, or co-injection moulding process, wherein the first not recycled polymeric material 20 and the second recycled polymeric material 22 are sequentially and continuously injected in a mould, as better described later. The first not recycled polymeric material 20 and the second recycled polymeric material 22 form therefore a one-piece monolithic body.

Co-injection moulding process advantageously provides a cost-effective solution when two materials needs to be linked one to the other.

In a preferred embodiment of the invention, the first and/or the second recycled polymeric material 20, 22 comprises polymers. Preferably, the first and/or the second recycled polymeric material comprises a thermoplastic material.

By the term "recycled material" it is meant that the material composing the recycled material has a lower degree of purity than that of a not recycled material.

Said recycled polymeric material preferably comprises a material deriving from post-consumer plastic and/or post-industrial plastic materials.

By the term "post-consumer plastic materials" it is meant the selected materials deriving from the separate collection of wastes, especially municipal solid wastes, preferably from packaging.

Another possible definition indicates that the "post-consumer plastic materials" are those materials which the consumer has stopped using and which may be solid, thrown away, or discharged as waste (The global Development Research Centre. Solid waste management. Glossary, http://glossaiy.eea.eui pa.eu), such as waste electrical and electronic equipment (WEEE) and waste from automotive industries.

By the term "post-industrial plastic" materials it is meant that such components are represented by industrial scraps and, i.e., by residues and/or scraps coming from or resulting from industrial processing of virgin plastic materials.

In a preferred embodiment, the recycled material deriving from plastic materials may be considered a polymeric material comprising one or more impurity chemical elements.

Preferably, the recycled material may be considered a polymeric material comprising one or more chemical elements of the group comprising the following chemical elements: Lead (Pb); Cadmium (Cd); Mercury (Hg); Hexavalent Chromium (Cr(VI)); Bromine (Br); Antimony (Sb); Arsenic (As); wherein said one or more chemical elements can be found in a quantity inside the recycled material above a minimum threshold.

Preferably, each impurity chemical element can be found inside the recycled material in a minimum quantity as listed below:
Lead (Pb) ≥ 7 ppm;
Cadmium (Cd) ≥ 5 ppm;
Mercury (Hg) ≥ 0.01 ppm;
Hexavalent Chromium (Cr(VI)) ≥ 10 ppm;
Bromine (Br) ≥ 5 ppm;
Antimony (Sb) ≥ 5 ppm;
Arsenic (As) ≥ 5 ppm.

Furthermore, preferably, each impurity chemical element can be found inside the recycled material in a quantity below a maximum threshold. Therefore, preferably, each impurity chemical element can be found inside the recycled material in a quantity which is inside a preferred range.

In preferred embodiments, the recycled material may derive from polyolefin polymers, for example Polypropylene (PP) or Polyethylene (PE), or from Styrenic polymers, for example Polystyrene (PS) or Acrylonitrile-Butadienestyrene (ABS).

When the recycled material derives from polyolefin polymers, for example, the recycled material may be considered a polymeric material comprising one or more impurity chemical elements which can be found inside the recycled material in a quantity according to table 1 below.

**Table 1**

| **Chemical element** | **Broad Range (ppm)** | **Intermediate Range (ppm)** | **Strict Range (ppm)** |
|---|---|---|---|
| Lead (Pb) | 7-1000 | 7-90 | 7-60 |
| Cadmium (Cd) | 5-100 | 5-40 | 5-20 |
| Mercury (llg) | 0.01-1000 | 0.01-10 | 0.01-0.5 |
| Hexavalent Chromium Cr(VI) | 10-1000 | 10-100 | 10-20 |
| Bromine (Br) | 5-400 | 5-100 | 5-60 |
| Antimony (Sb) | 5-200 | 5-100 | 5-50 |
| Arsenic (As) | 5-1000 | 5-100 | 5-50 |

In a preferred embodiment and according to the Table 1 above, each impurity chemical element can be found inside the recycled material in a quantity below a maximum threshold as listed below:
Lead (Pb) <_ 60 ppm;
Cadmium (Cd) <_ 20 ppm;
Mercury (Hg) ≤ 0.5 ppm;
Hexavalent Chromium (Cr(VI)) ≤ 20 ppm;
Bromine (Br) ≤ 60 ppm;
Antimony (Sb) ≤ 50 ppm;
Arsenic (As) ≤ 50 ppm.

Preferably, impurity chemical elements falling within these maximum thresholds guarantee a good standard in term of mechanical properties (stiffness, strength, etc.) to the component.

When the recycled material derives from styrenic polymers, for example, the recycled material may be considered a polymeric material comprising one or more impurity chemical elements which can be found inside the recycled material in a quantity according to table 2.

**Table 2**

| **Chemical element** | **Broad Range (ppm)** | **Intermediate Range (ppm)** | **Strict Range (ppm)** |
|---|---|---|---|
| Lead (Pb) | 7-1000 | 7-100 | 7-90 |
| Cadmium (Cd) | 5-100 | 5-50 | 5-40 |
| Mercury (Hg) | 0.01-1000 | 0.01-10 | 0.01-0.5 |
| Hexavalent Chromium Cr(VI) | 10-1000 | 10-200 | 10-100 |
| Bromine (Br) | 5-400 | 5-200 | 5-100 |
| Antimony (Sb) | 5-700 | 5-300 | 5-200 |
| Arsenic (As) | 5-1000 | 5-800 | 5-500 |

In a preferred embodiment and according to the Table 2 above, each impurity chemical element can be found inside the recycled material in a quantity below a maximum threshold as listed below:
Lead (Pb) ≤ 90 ppm;
Cadmium (Cd) ≤ 40 ppm;
Mercury (Hg) ≤ 0.5 ppm;
Hexavalent Chromium (Cr(VI)) ≤ 100 ppm;
Bromine (Br) ≤ 100 ppm;
Antimony (Sb) ≤ 200 ppm;
Arsenic (As) ≤ 200 ppm.

Preferably, impurity chemical elements falling within these maximum thresholds guarantee a good standard in term of mechanical properties (stiffness, strength, etc.) to the component.

In a first advantageous aspect of the invention, the component 1 may be manufactured with low cost thanks to the use of a recycled material but, at the same time, the aesthetic appearance of the component 1 is significantly improved compared to known components thanks to the use of a not recycled material, namely the external layer of first not recycled polymeric material 20.

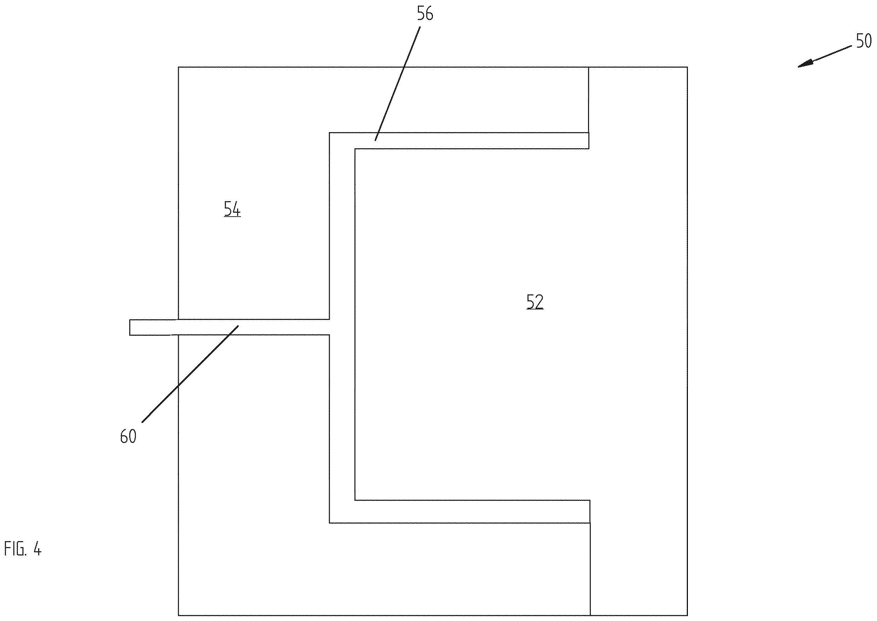

In a further advantageous aspect of the invention, the use of recycled materials to produce the component reduces the environmental impact in terms of plastic materials consumption and in terms of re-use/recycling of waste plastic materials. With reference to figures 4 to 7 a method to obtain a rear hemi-shell 12 according to a preferred embodiment of the invention is described.

Preferably, a moulding injection process is used to obtain the rear hemi-shell 12, or co-injection moulding process.

Figure 4 schematically shows a mould 50 used in a moulding injection process to obtain the rear hemi-shell 12 of the washing tub 1.

In a similar way, a proper mould (not shown) is used in a moulding injection process to obtain the front hemi-shell 10 of the washing tub 1.

The mould 50 preferably comprises two sides 52, 54 defining a cavity 56 with the desired shape of the rear hemi-shell 12. The mould 50 comprises at least one injection point/channel 60 through which molten polymeric material is forced into the mould cavity 56.

In different preferred embodiments, the mould may comprise a plurality of injection points/channels through which molten polymeric material is forced into the mould cavity.

For example, the mould may comprise four injection points/channels through which molten polymeric material is forced into the mould cavity. The four injection points/channels are preferably opportunely arranged to allow the more uniform distribution of the molten polymeric material inside the mould.

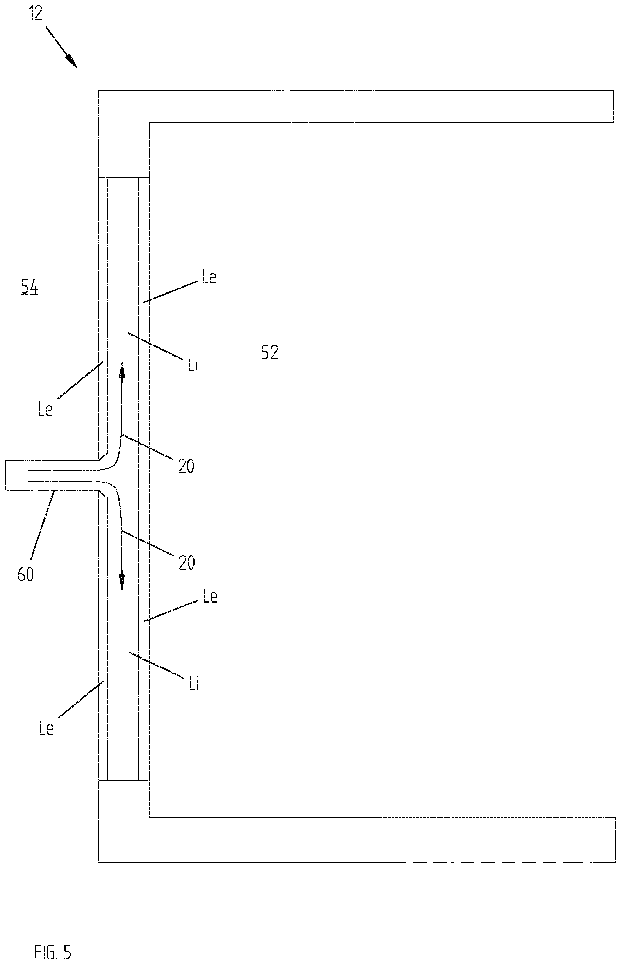

Figure 5 shows a first phase of the injection process.

A first molten not recycled polymeric material 20 is forced into the mould cavity 56 via the injection point/channel 60.

The first not recycled polymeric material 20 injected into the cavity 56 that touches the internal surfaces (walls) of the mould 50 cools rapidly and at least partially solidifies due to the low wall temperature of the mould 50. At this stage, as illustrated in figure 5, an external layer Le of first solidified not recycled polymeric material 20 encloses a molten core Li of first not recycled polymeric material 20.

The first not recycled polymeric material 20 is injected into the cavity 56 for a first time T1.

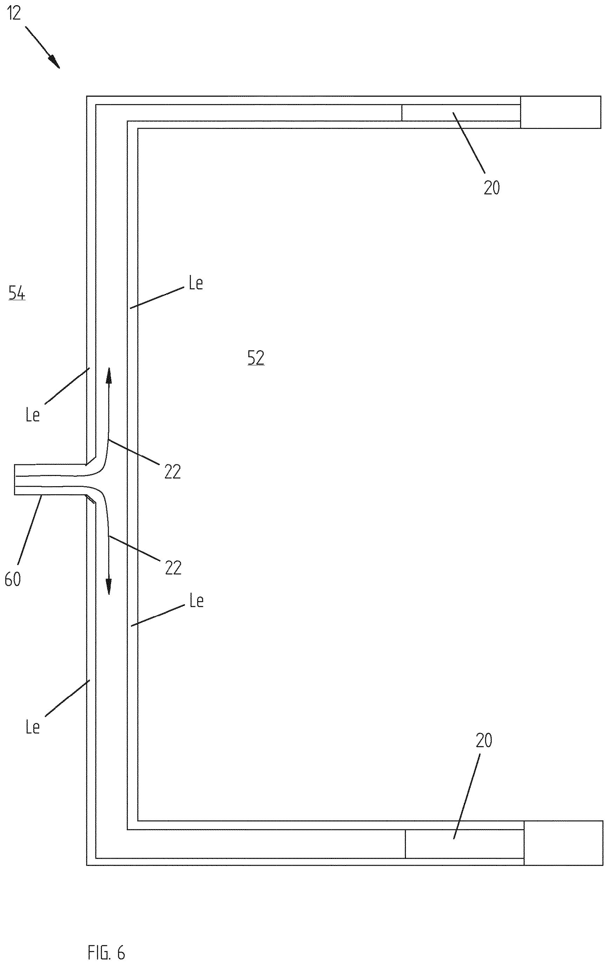

From the end of the first time T1 the second molten recycled polymeric material 22 is subsequentially and continuously forced into the mould cavity 56 via the injection point/channel 60, as illustrated in Figure 6.

The second recycled polymeric material 22 injected into the cavity 56 fills the core of the cavity 56 and pushes the molten core Li of the first not recycled polymeric material 20 that reaches all remaining internal surfaces of the mould 50 where at least partially solidifies.

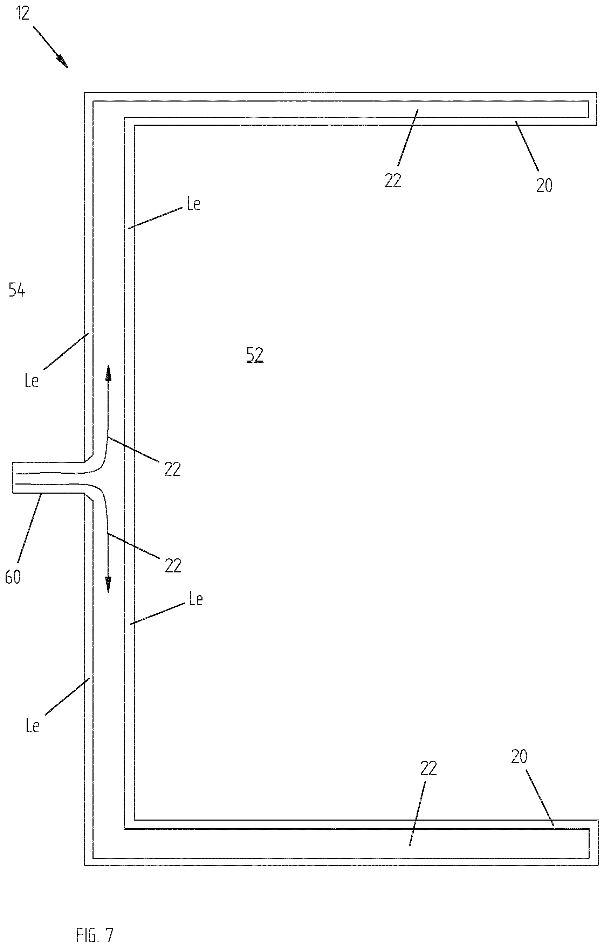

The second recycled polymeric material 22 is injected into the cavity 56 for a second time T2. At the end of the second time T2, the second molten recycled polymeric material 22 fills completely the core of rear hemi-shell 12 and is completely surrounded by the first not recycled polymeric material 20, as illustrated in Figure 7. The first not recycled polymeric material 20, in turn, reaches all the remaining internal surfaces of the mould 50 and completely covers the second recycled polymeric material 22.

At the end of the second time T2, the injection of material into the cavity 56 is stopped. The first not recycled polymeric material 20 and the second recycled polymeric material 22 then completely solidified, preferably through heating of the mould 50, and the mould 50 may be finally opened and the final product 12 extracted therefrom.

It has to be noted that in the figures the first not recycled polymeric material and the second recycled polymeric material are shown as clear separate layers. It is clear that the first not recycled polymeric material and the second recycled polymeric material preferably partially penetrate each other for a small section so as to form a one-piece monolithic body.

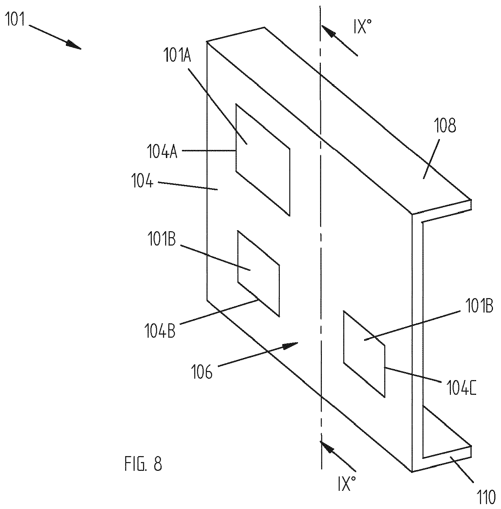

With reference to Figure 8 a first preferred embodiment of a user control panel 101 realized with a method according to the invention is shown.

The user control panel 101 is preferably arranged at a frontal panel of a laundry washing machine (not shown) so that a user may select and set washing parameters, like for example the desired washing program, the washing temperature, the spinning speed, etc. The user control panel 101 preferably comprises a display 101A and/or one or more selector devices 101B, 101C, for example a push button or a touch screen, which allow to select said parameters. The user control panel 101 preferably comprises a support body 104 and apertures 104A, 104B, 104C to which the display 101A and the selector devices 101B, 101C may be fitted.

The support body 104 preferably has a substantially planar frontal surface 106 where the display 101A and the selector devices 101B, 101C are arranged. The support body 104 then preferably comprises two mounting ribs 108, 110 suited to mount the user control panel 101 to the frontal panel of the laundry washing machine.

The planar frontal surface 106 of the support body 104 represents the surface of the user control panel 101 which is visible from outside when the user control panel 101 is assembled on the laundry washing machine.

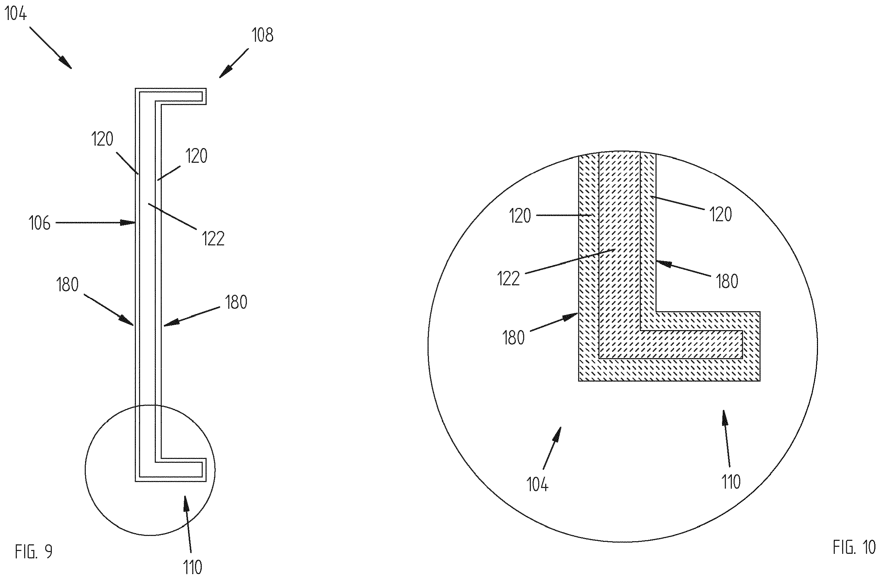

According to an aspect of the invention, the support body 104 preferably comprises a first not recycled polymeric material 120 and a second recycled polymeric material 122, as better illustrated in figures 9 and 10.

The first not recycled polymeric material 120 constitutes the external surface 180 of the support body 104 and covers the second recycled polymeric material 122. In the first preferred embodiment here described, the first not recycled polymeric material 120 constitutes the overall external surface 180 of the support body 104 and completely covers the second recycled polymeric material 122.

The second recycled polymeric material 122 constitutes the core of the support body 104 and is completely surrounded by the first not recycled polymeric material 120.

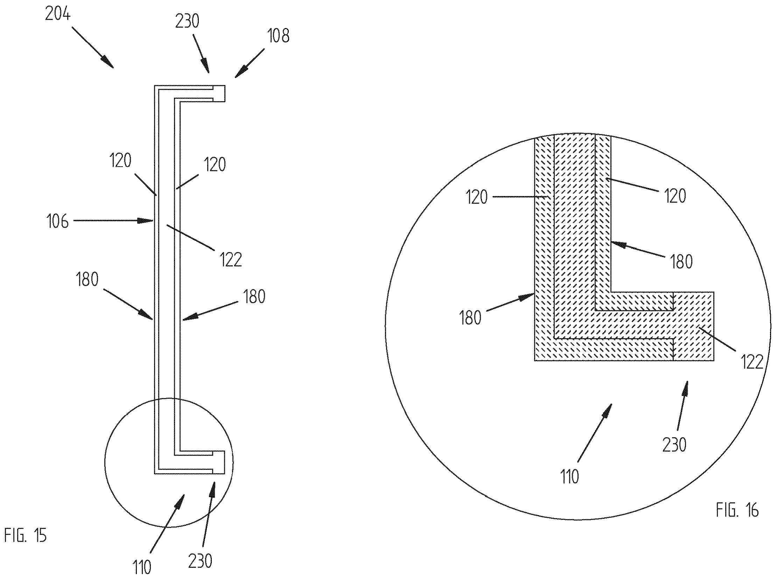

In a further preferred embodiment, for example the embodiment better described later with reference to figures 15 to 19, the external surface of the support body is at least partially constituted by the first not recycled polymeric material and partially covers the second recycled polymeric material. The second recycled polymeric material constitutes the core of the support body and, in part, constitutes the external surface of the support body.

The support body 104 is preferably obtained through a continuous injection moulding process wherein the first not recycled polymeric material 120 and the second recycled polymeric material 122 are sequentially and continuously injected in a mould, as better described later. The first not recycled polymeric material 120 and the second recycled polymeric material 122 form therefore a one-piece monolithic body.

First and/or the second recycled polymeric material 120, 122 comprises polymers, as mentioned above. Preferably, the first and/or the second recycled polymeric material comprises a thermoplastic material. In a further preferred embodiment, the first and/or the second recycled polymeric material comprise a thermosetting material.

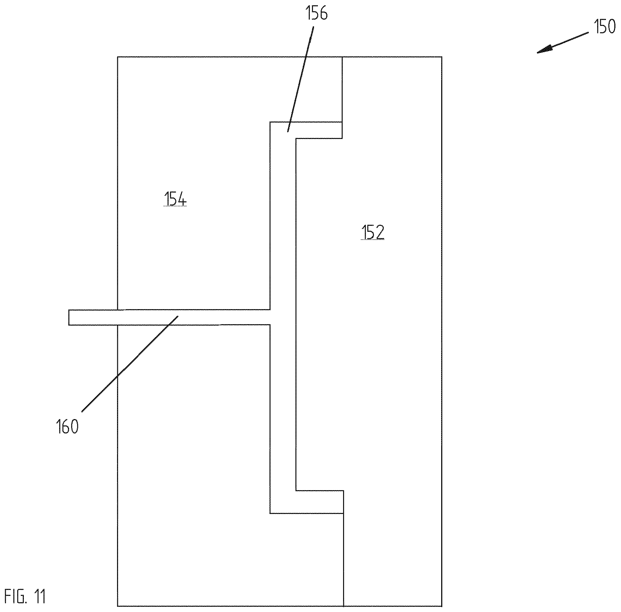

With reference to figures 11 to 14 a method to obtain a support body 104 according to a preferred embodiment of the invention is described.

Preferably, a moulding injection process is used to obtain the support body 104.

Figure 11 schematically shows a mould 150 used in a moulding injection process to obtain the support body 104.

The mould 150 preferably comprises two sides 152, 154 defining a cavity 156 with the desired shape of the support body 104. The mould 150 comprises an injection point/channel 160 through which molten polymeric material is forced into the mould cavity 156.

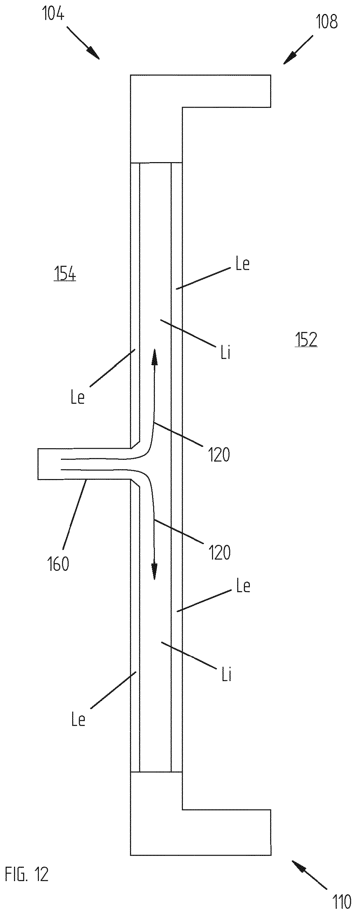

Figure 12 shows a first phase of the injection process.

A first molten not recycled polymeric material 120 is forced into the mould cavity 156 via the injection point/channel 160.

The first not recycled polymeric material 120 injected into the cavity 156 that touches the internal surfaces (walls) of the mould 150 cools rapidly and at least partially polymerises due to the low wall temperature of the mould 150. At this stage, as illustrated in figure 12, an external layer Le of first not recycled solidified polymeric material 120 encloses a molten core Li of first not recycled polymeric material 120.

The first not recycled polymeric material 120 is injected into the cavity 156 for a first time T1.

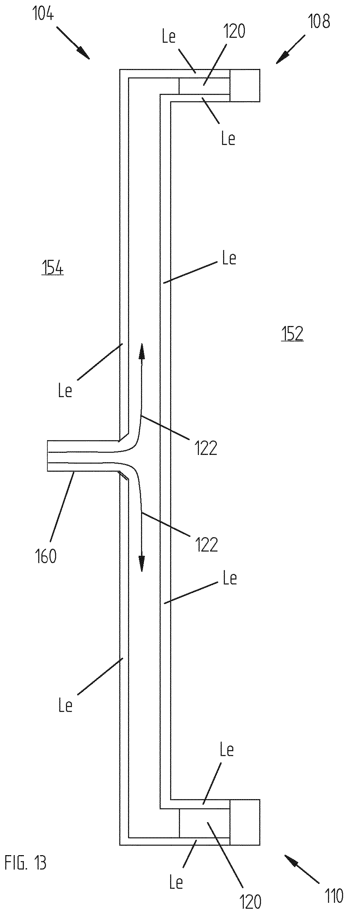

From the end of the first time T1 the second molten recycled polymeric material 122, is sub sequentially and continuously forced into the mould cavity 156 via the injection point/channel 160, as illustrated in Figure 13.

The second recycled polymeric material 122 injected into the cavity 156 fills the core of the cavity 156 and pushes the molten core Li of the first not recycled polymeric material 120 that reaches all remaining internal surfaces of the mould 150 where at least partially solidifies.

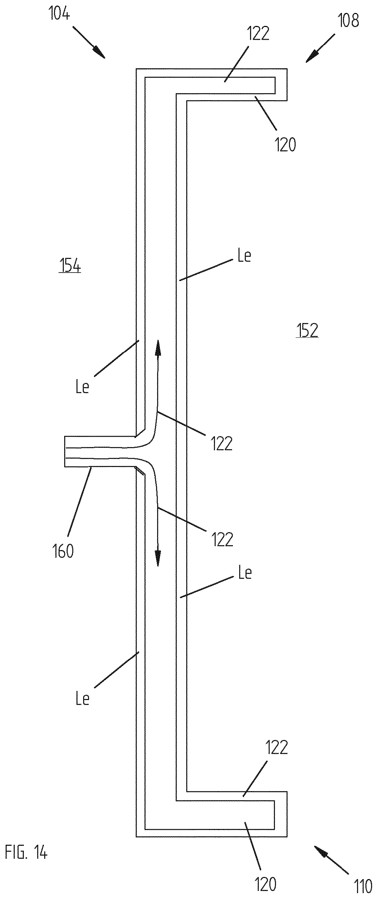

The second recycled polymeric material 122 is injected into the cavity 156 for a second time T2. At the end of the second time T2, the second molten recycled polymeric material 122 fills completely the core of the support body 104 and is completely surrounded by the first not recycled polymeric material 120, as illustrated in Figure 14. The first not recycled polymeric material 120, in turn, reaches all the remaining internal surfaces of the mould 150 and completely covers the second recycled polymeric material 122.

At the end of the second time T2, the injection of material into the cavity 156 is stopped. The first not recycled polymeric material 120 and the second recycled polymeric material 122 then completely solidified, preferably through heating of the mould 150, and the mould 150 may be finally opened and the support body 104 extracted therefrom.

It has to be noted that in the figures the first not recycled polymeric material and the second recycled polymeric material are shown as clear separate layers. It is clear that the first not recycled polymeric material and the second recycled polymeric material preferably partially penetrate each other for a small section so as to form a one-piece monolithic body.

Figures 15 and 16 show a further preferred embodiment of a support body 204 realized with a method according to the invention. This support body 204 differs from the support body 104 previously described with reference to Figures 9 and 10 in that the external surface 180 of the support body 204 is not totally constituted by the first not recycled polymeric material 120. End portions 230 of the mounting ribs 108, 110 are constituted by the second recycled polymeric material 122.

The first not recycled polymeric material 120, therefore, partially covers the second recycled polymeric material 122. The second recycled polymeric material 122 constitutes the core of the support body 204 and, in part, constitutes the external surface 180 of the support body 204.

The end portions 230 constituted by the second recycled polymeric material 122 are preferably not visible from outside when the user control panel is assembled on the laundry washing machine.

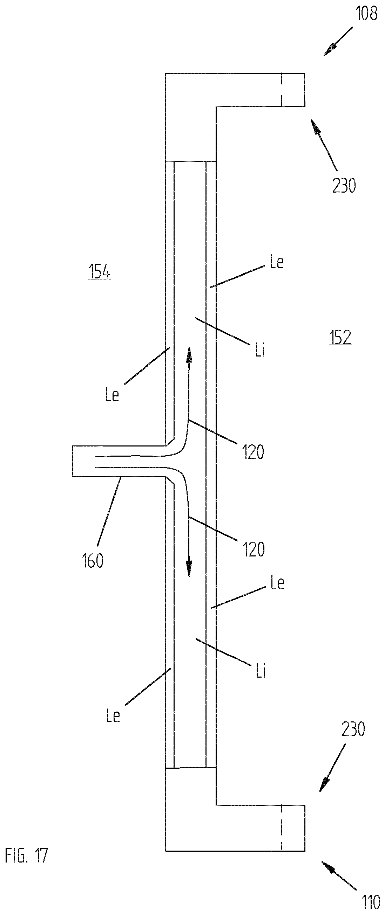

With reference to figures 17 to 19 a method to obtain a support body 204 according to the invention is described.

Preferably, a moulding injection process is used to obtain the support body 204. The same mould 150 described above is used to obtain the support body 204.

Figure 17 shows a first phase of the injection process.

A first molten not recycled polymeric material 120 is forced into the mould cavity 156 via the injection point/channel 160.

The first not recycled polymeric material 120 injected into the cavity 156 that touches the internal surfaces (walls) of the mould 150 cools rapidly and at least partially polymerises due to the low wall temperature of the mould 150. At this stage, as illustrated in figure 17, an external layer Le of first not recycled solidified polymeric material 120 encloses a molten core Li of first not recycled polymeric material 120.

The first not recycled polymeric material 120 is injected into the cavity 156 for a first time T1'.

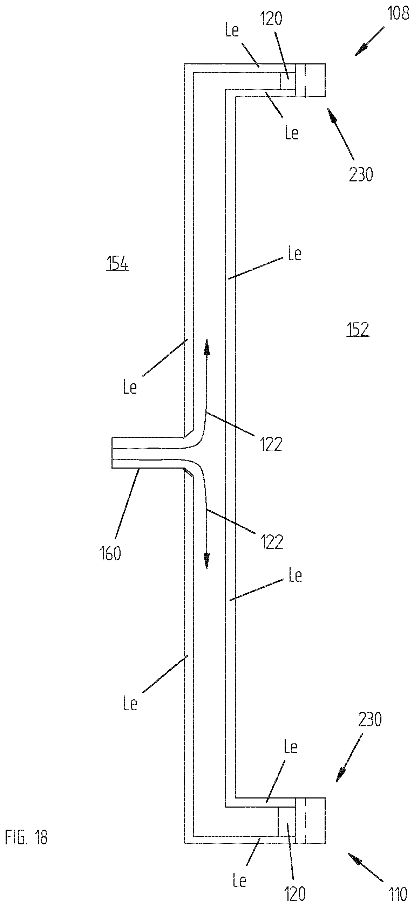

From the end of the first time T1', the second molten recycled polymeric material 122 is subsequentially and continuously forced into the mould cavity 156 via the injection point/channel 160, as illustrated in Figure 18.

The second recycled polymeric material 122 injected into the cavity 156 fills the core of the cavity 156 and pushes the molten core Li of the first not recycled polymeric material 120. All the first not recycled polymeric material 120 distributes over the internal surfaces of the mould 150 where at least partially solidifies, except for the end portions 230.

The second recycled polymeric material 122 is injected into the cavity 156 for a second time T2'. The second recycled polymeric material 122 reaches the end portions 230 where at least partially solidifies.

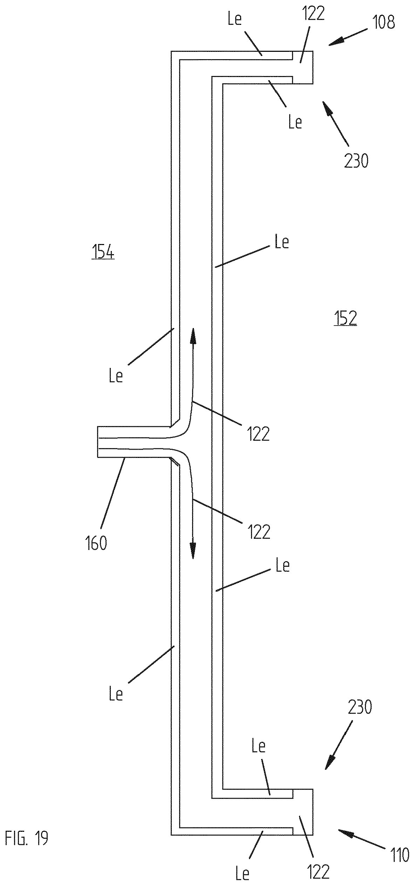

The second molten recycled polymeric material 122 fills the core of the support body 204 and also the end portions 230, as illustrated in Figure 19.

At the end of the second time T2', the injection of material into the cavity 156 is stopped. The first not recycled polymeric material 120 and the second recycled polymeric material 122 then completely solidified, preferably through heating of the mould 150, and the mould 150 may be finally opened and the support body 204 extracted therefrom.

The method above described to obtain a component according to the invention, for example a washing tub or a user control panel, eventually carries out a co-injection moulding process wherein the first polymeric material and the second polymeric material are injected, one after the other, into the same mould.

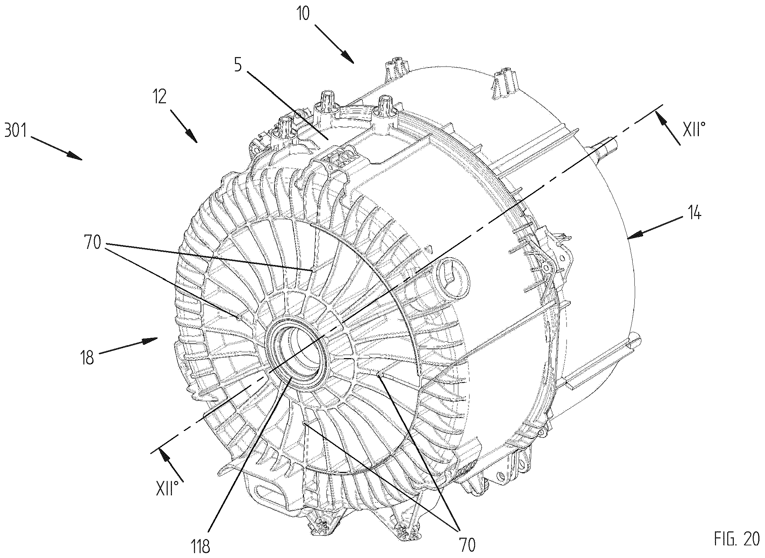

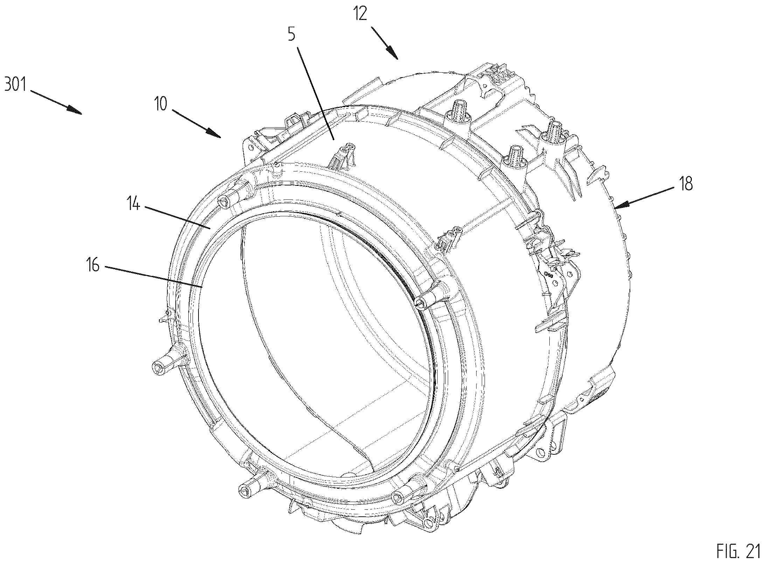

With reference to Figures 20 to 22 a further preferred embodiment of a washing tub 301 according to the invention is shown. In the drawings, corresponding characteristics and/or components compared to first preferred embodiment are identified by the same reference numbers.

The washing tub 301 has a substantially cylindrical-shaped tubular body 5.

The washing tub 301 preferably comprises a first hemi-shell 10, or front hemi-shell 10, and a second hemi-shell 12, or rear hemi-shell 12, structured for being reciprocally coupled to form the washing tub 301.

The front hemi-shell 10 of the washing tub 301 preferably comprises a front wall 14 provided with a front mouth 16.

The rear hemi-shell 12 of the washing tub 301 preferably comprises a rear wall 18.

The rear wall 18 preferably comprises a mounting hole 318 for a driving shaft (not shown).

According to the invention, as described above, the washing tub 301 preferably comprises a first polymeric material 20 and a second polymeric material 22.

The first polymeric material 20 constitutes the external surface 80 of the washing tub 301 and completely covers the second polymeric material 22.

The second polymeric material 22 constitutes the core of the washing tub 301 and is completely surrounded by the first polymeric material 20.

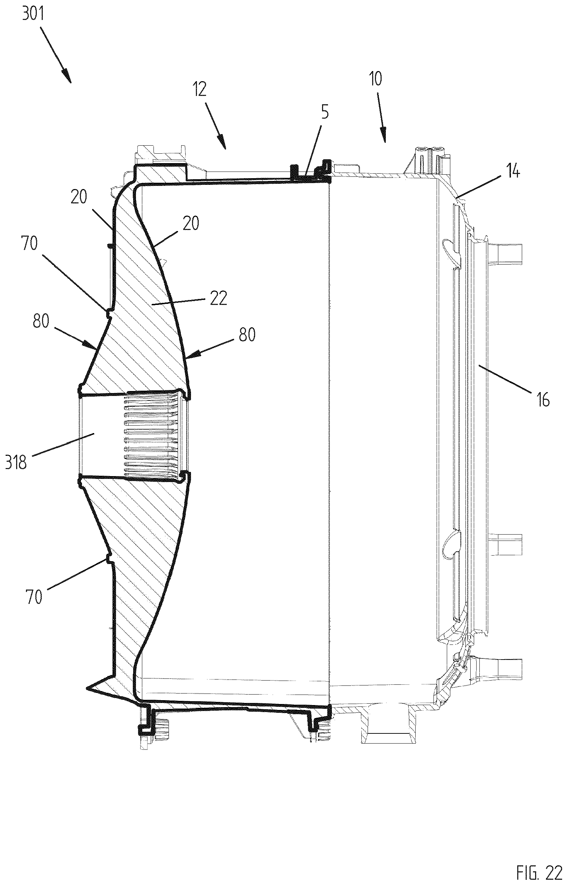

In figure 22, first and second polymeric materials 20, 22 are depicted only for rear hemi-shell 12 for clarity's sake. It has to be noted that the same applies to the front hemi-shell 10.

The component 301 is preferably obtained through a continuous injection moulding process as described above with reference to the first embodiment. Preferably, a moulding injection process is used to obtain the rear hemi-shell 12 and a moulding injection process is used to obtain the front hemi-shell 10.

A proper shaped mould is used to obtain the rear hemi-shell 12 of the washing tub 301.

The mould preferably comprises four injection point/channels through which molten polymeric material is forced into the mould cavity. The four injection points/channels are preferably opportunely arranged to allow the more uniform distribution of the molten polymeric material inside the mould. The injection points are preferably arranged in the mould to define corresponding four injection points 70 at the rear hemi-shell 12 around the mounting hole 318, as visible on Figure 20.

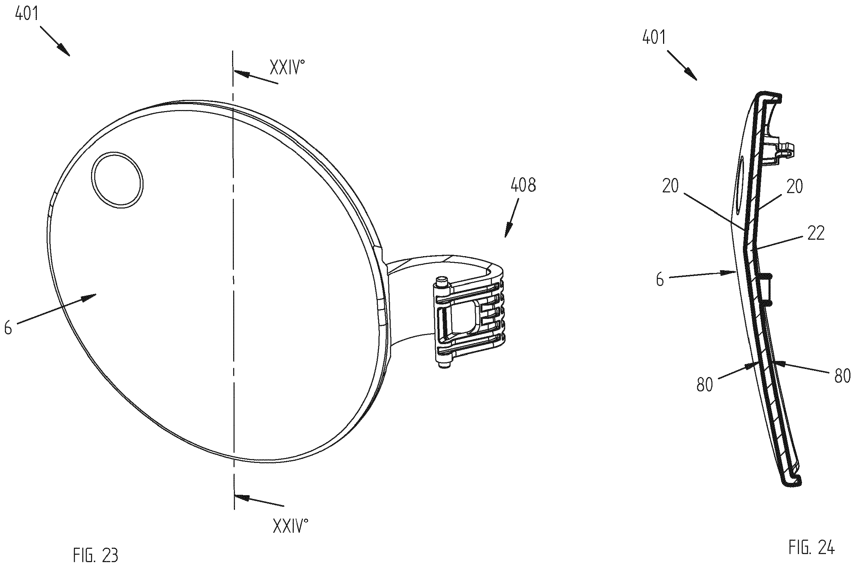

With reference to Figures 23 and 24 a further preferred embodiment of a component 401 according to the invention is shown. In the drawings, corresponding characteristics and/or components compared to previous preferred embodiments are identified by the same reference numbers.

The component 401 refers to a filter door 401 which is preferably arranged at a frontal side of a laundry washing machine (not shown) so that a user may easily access the filter, for example for cleaning it.

The filter door 401 preferably has a substantially planar frontal surface 6 and comprises a hinge 408 suited to mount the filter door 8 to the frontal side of the laundry washing machine.

The planar frontal surface 6 represents the surface of the filter door 401 which is visible from outside when the filter door 401 is assembled on the laundry washing machine.

According to an aspect of the invention, the filter door 401 preferably comprises a first polymeric material 20 and a second polymeric material 22, as better illustrated in figure 24.

The first polymeric material 20 constitutes the external surface 80 of the filter door 101 and covers the second polymeric material 22.

In the preferred embodiment here described, the first polymeric material 20 constitutes the overall external surface 80 of the filter door 401 and completely covers the second polymeric material 22.

The second polymeric material 22 constitutes the core of the filter door 401 and is completely surrounded by the first polymeric material 20.

The filter door 401 is preferably obtained through a continuous injection moulding process as described above with reference to the first embodiment.

The filter door 401 is preferably obtained through a continuous injection moulding process wherein the first polymeric material 20 and the second polymeric material 22 are sequentially and continuously injected in a mould.

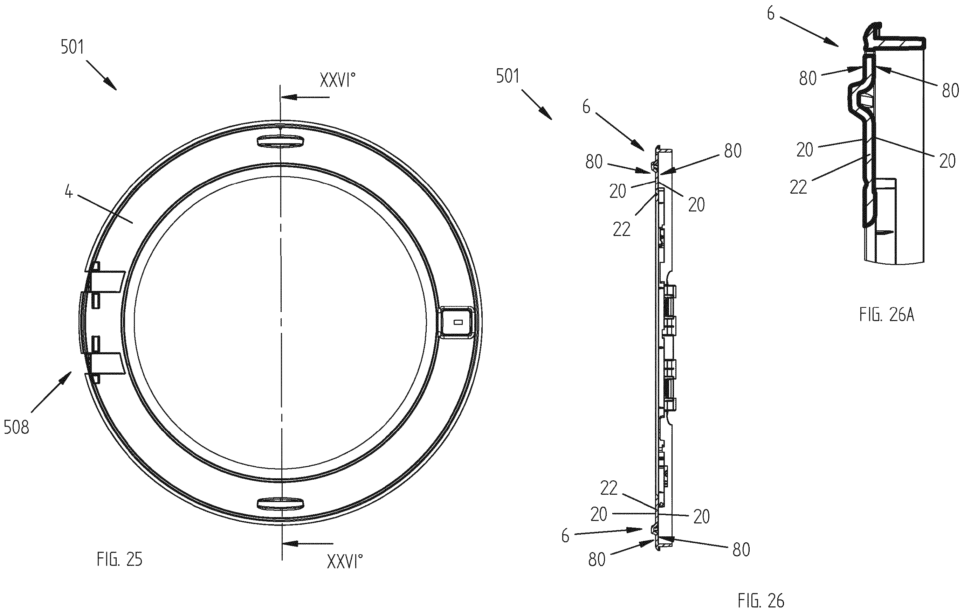

With reference to Figures 25 to 26A a further preferred embodiment of a component 501 according to the invention is shown. In the drawings, corresponding characteristics and/or components compared to previous preferred embodiments are identified by the same reference numbers.

The component 501 refers to a door frame 501 which is preferably arranged at a frontal side of a laundry washing machine (not shown) so that a user may easily access the washing drum.

The door frame 501 preferably has a substantially planar annular frontal surface 6 and comprises a hinge system 508 suited to mount the door frame 501 to the frontal side of the laundry washing machine.

The planar frontal surface 6 represents the surface of the door frame 501 which is visible from outside when the door frame 501 is assembled on the laundry washing machine.

According to an aspect of the invention, the door frame 501 preferably comprises a first polymeric material 20 and a second polymeric material 22, as better illustrated in figure 26A.

The first polymeric material 20 constitutes the external surface 80 of the door frame 201 and covers the second polymeric material 22.

In the preferred embodiment here described, the first polymeric material 20 constitutes the overall external surface 80 of the door frame 501 and completely covers the second polymeric material 22.

The second polymeric material 22 constitutes the core of the door frame 501 and is completely surrounded by the first polymeric material 20.

The door frame 501 is preferably obtained through a continuous injection moulding process as described above with reference to the first embodiment.

The door frame 501 is preferably obtained through a continuous injection moulding process wherein the first polymeric material 20 and the second polymeric material 22 are sequentially and continuously injected in a mould.

It has thus been shown that the present invention allows all the set objects to be achieved. In particular, it makes it possible to optimize mechanics and/or aesthetics characteristics of plastic components on the base of the type of plastic material used in the producing process.

While the present invention has been described with reference to the particular embodiments shown in the figures, it should be noted that the present invention is not limited to the specific embodiments illustrated and described herein; on the contrary, further variants of the embodiments described herein fall within the scope of the present invention, which is defined in the claims.

## Claims

1. Method for producing a component (1; 101, 104; 204; 301: 401; 501) for a water bearing appliance, comprising the steps of:
- injecting from at least one injection point (60; 160) a first not recycled polymeric material (20) into a cavity (56; 156) of a mould (50; 150) for a first time so that said first not recycled polymeric material (20) reaches internal surfaces of said mould (50; 150) and at least partially solidifies to form an external solidified layer (Le);
- injecting from said at least one injection point (60; 160), after said first time, a second recycled polymeric material (22) into said mould (50; 150) for a second time so that said second recycled polymeric material (22) fills the core of said cavity (56; 156) and pushes the first not recycled polymeric material (20) not jet solidified;
**characterized in that**
said recycled material comprises a polymeric material comprising one or more chemical elements of the group comprising the following chemical elements: Lead; Cadmium; Mercury; Hexavalent Chromium; Bromine; Antimony; Arsenic; wherein said one or more chemical elements are in a quantity inside said recycled material above, or equal to, a minimum threshold, wherein said minimum threshold for Lead is 7 ppm and/or said minimum threshold for Cadmium is 5 ppm and/or said minimum threshold for Mercury is 0.01 ppm and/or said minimum threshold for Hexavalent Chromium is 10 ppm and/or said minimum threshold for Bromine is 5 ppm and/or said minimum threshold for Antimony is 5 ppm and/or said minimum threshold for Arsenic is 5 ppm;
wherein said recycled material derives from polyolefin polymers, wherein said one or more chemical elements are in a quantity inside said recycled material below, or equal to, a maximum threshold, wherein said maximum threshold for Lead is 90 ppm and/or said maximum threshold for Cadmium is 40 ppm and/or said maximum threshold for Mercury is 10 ppm and/or said maximum threshold for Hexavalent Chromium is 100 ppm and/or said maximum threshold for Bromine is 100 ppm and/or said maximum threshold for Antimony is 100 ppm and/or said maximum threshold for Arsenic is 100 ppm, or
wherein said recycled material derives from styrenic polymers, wherein said one or more chemical elements are in a quantity inside said recycled material below, or equal to, a maximum threshold, wherein said maximum threshold for Lead is 100 ppm and/or said maximum threshold for Cadmium is 50 ppm and/or said maximum threshold for Mercury is 10 ppm and/or said maximum threshold for Hexavalent Chromium is 200 ppm and/or said maximum threshold for Bromine is 200 ppm and/or said maximum threshold for Antimony is 300 ppm and/or said maximum threshold for Arsenic is 800 ppm.

2. Method according to claim 1, **characterized in that** said second recycled polymeric material (22) pushes said first not recycled polymeric material (20) not jet solidified so that said first not recycled polymeric material (20) reaches all remaining internal surfaces of said mould (50; 150) where at least partially solidifies and forms an external solidified layer (Le).

3. Method according to claim 1, **characterized in that** said second recycled polymeric material (22) pushes said first not recycled polymeric material (20) not jet solidified so that said first not recycled polymeric material (20) reaches some remaining internal surfaces of said mould (50; 150) where at least partially solidifies and forms an external solidified layer (Le) and so that said second recycled polymeric material (22) reaches all remaining internal surfaces of said mould (50; 150) where at least partially solidifies and forms an external solidified layer (Le).

4. Method according to claim 1 or 2, **characterized in that** said first time of injection is set so that said first not recycled polymeric material (20) reaches all internal surfaces of said mould (50; 150).

5. A method according to any of the preceding claims, **characterized in that** said first not recycled polymeric material (20) and/or said second recycled polymeric material (22) comprises polymers.

6. A method according to any of the preceding claims, **characterized in that** said first not recycled polymeric material (20) and/or said second recycled polymeric material (22) comprises a thermoplastic material.

7. A method according to any of the preceding claims, **characterized in that** said recycled material derives from post-consumer plastic and/or post-industrial plastic materials.

8. A method according to any of the preceding claims, **characterized in that** said recycled material derives from polyolefin polymers, wherein said one or more chemical elements can be found in a quantity inside said recycled material below, or equal to, a maximum threshold, wherein said maximum threshold for Lead is 60 ppm and/or said maximum threshold for Cadmium is 20 ppm and/or said maximum threshold for Mercury is 0.5 ppm and/or said maximum threshold for Hexavalent Chromium is 20 ppm and/or said maximum threshold for Bromine is 60 ppm and/or said maximum threshold for Antimony is 50 ppm and/or said maximum threshold for Arsenic is 50 ppm.

9. A method according to any of the preceding claims, **characterized in that** said recycled material derives from styrenic polymers, wherein said one or more chemical elements can be found in a quantity inside said recycled material below, or equal to, a maximum threshold, wherein said maximum threshold for Lead is 90 ppm and/or said maximum threshold for Cadmium is 40 ppm and/or said maximum threshold for Mercury is 10 ppm and/or said maximum threshold for Hexavalent Chromium is 100 ppm and/or said maximum threshold for Bromine is 100 ppm and/or said maximum threshold for Antimony is 200 ppm and/or said maximum threshold for Arsenic is 200 ppm.

10. Component (1; 101, 104; 204; 301: 401; 501) for a water bearing appliance obtained by a method according to any of the preceding claims.

11. A component (1; 101, 104; 204; 301: 401; 501) according to claim 10, **characterized in that** said component (1; 101, 104; 204; 301: 401; 501) is one of: a tub (1) of said water bearing appliance, a casing component of said water bearing appliance, a control panel (101) of said water bearing appliance.

## Patentansprüche

1. Verfahren zum Herstellen einer Komponente (1; 101, 104; 204; 301: 401; 501) für ein wasserführendes Gerät, umfassend die Schritte:
- Einspritzen eines ersten nicht recycelten Polymermaterials (20) in einen Hohlraum (56; 156) einer Form (50; 150) von mindestens einem Einspritzpunkt (60; 160) aus für eine erste Zeit, sodass das erste nicht recycelte Polymermaterial (20) Innenflächen der Form (50; 150) erreicht und unter Bildung einer äußeren erstarrten Schicht (Le) zumindest teilweise erstarrt;
- Einspritzen eines zweiten recycelten Polymermaterials (22) in die Form (50; 150) von dem mindestens einen Einspritzpunkt (60; 160) aus nach der ersten Zeit für eine zweite Zeit, sodass das zweite recycelte Polymermaterial (22) den Kern des Hohlraums (56; 156) füllt und das erste nicht recycelte Polymermaterial (20), das noch nicht erstarrt ist, schiebt;
**dadurch gekennzeichnet, dass**
das recycelte Material ein Polymermaterial umfasst , das ein oder mehrere chemische Elemente der Gruppe umfassend die folgenden chemischen Elemente umfasst: Blei; Cadmium; Quecksilber; sechswertiges Chrom; Brom; Antimon; Arsen; wobei das eine oder die mehreren chemischen Elemente in einer Menge in dem recycelten Material über oder gleich einem minimalen Schwellenwert vorhanden sind, wobei der minimale Schwellenwert für Blei 7 ppm beträgt und/oder der minimale Schwellenwert für Cadmium 5 ppm beträgt und/oder der minimale Schwellenwert für Quecksilber 0,01 ppm beträgt und/oder der minimale Schwellenwert für sechswertiges Chrom 10 ppm beträgt und/oder der minimale Schwellenwert für Brom 5 ppm beträgt und/oder der minimale Schwellenwert für Antimon 5 ppm beträgt und/oder der minimale Schwellenwert für Arsen 5 ppm beträgt; wobei das recycelte Material von Polyolefinpolymeren abgeleitet ist, wobei das eine oder die mehreren chemischen Elemente in einer Menge in dem recycelten Material unter oder gleich einem maximalen Schwellenwert vorhanden sind, wobei der maximale Schwellenwert für Blei 90 ppm beträgt und/oder der maximale Schwellenwert für Cadmium 40 ppm beträgt und/oder der maximale Schwellenwert für Quecksilber 10 ppm beträgt und/oder der maximale Schwellenwert für sechswertiges Chrom 100 ppm beträgt und/oder der maximale Schwellenwert für Brom 100 ppm beträgt und/oder der maximale Schwellenwert für Antimon 100 ppm beträgt und/oder der maximale Schwellenwert für Arsen 100 ppm beträgt, oder
wobei das recycelte Material von Styrolpolymeren abgeleitet ist, wobei das eine oder die mehreren chemischen Elemente in einer Menge in dem recycelten Material unter oder gleich einem maximalen Schwellenwert vorhanden sind, wobei der maximale Schwellenwert für Blei 100 ppm beträgt und/oder der maximale Schwellenwert für Cadmium 50 ppm beträgt und/oder der maximale Schwellenwert für Quecksilber 10 ppm beträgt und/oder der maximale Schwellenwert für sechswertiges Chrom 200 ppm beträgt und/oder der maximale Schwellenwert für Brom 200 ppm beträgt und/oder der maximale Schwellenwert für Antimon 300 ppm beträgt und/oder der maximale Schwellenwert für Arsen 800 ppm beträgt.

2. Verfahren nach Anspruch 1, **dadurch gekennzeichnet, dass** das zweite recycelte Polymermaterial (22) das erste nicht recycelte Polymermaterial (20), das noch nicht erstarrt ist, schiebt, sodass das erste nicht recycelte Polymermaterial (20) alle verbleibenden Innenflächen der Form (50; 150) erreicht, wo es zumindest teilweise erstarrt und eine äußere erstarrte Schicht (Le) bildet.

3. Verfahren nach Anspruch 1, **dadurch gekennzeichnet, dass** das zweite recycelte Polymermaterial (22) das erste nicht recycelte Polymermaterial (20), das noch nicht erstarrt ist, schiebt, sodass das erste nicht recycelte Polymermaterial (20) einige verbleibende Innenflächen der Form (50; 150) erreicht, wo es zumindest teilweise erstarrt und eine äußere erstarrte Schicht (Le) bildet und sodass das zweite recycelte Polymermaterial (22) alle verbleibenden Innenflächen der Form (50; 150) erreicht, wo es zumindest teilweise erstarrt und eine äußere erstarrte Schicht (Le) bildet.

4. Verfahren nach Anspruch 1 oder 2, **dadurch gekennzeichnet, dass** die erste Einspritzzeit so eingestellt ist, dass das erste nicht recycelte Polymermaterial (20) alle Innenflächen der Form (50; 150) erreicht.

5. Verfahren nach einem der vorstehenden Ansprüche, **dadurch gekennzeichnet, dass** das erste nicht recycelte Polymermaterial (20) und/oder das zweite recycelte Polymermaterial (22) Polymere umfassen .

6. Verfahren nach einem der vorstehenden Ansprüche, **dadurch gekennzeichnet, dass** das erste nicht recycelte Polymermaterial (20) und/oder das zweite recycelte Polymermaterial (22) ein thermoplastisches Material umfassen.

7. Verfahren nach einem der vorstehenden Ansprüche, **dadurch gekennzeichnet, dass** das recycelte Material von durch Verbraucher bereits verwendetem Kunststoff und/oder industriell bereits verwendeten Kunststoffmaterialien abgeleitet ist.

8. Verfahren nach einem der vorstehenden Ansprüche, **dadurch gekennzeichnet, dass** das recycelte Material von Polyolefinpolymeren abgeleitet ist, wobei das eine oder die mehreren chemischen Elemente in dem recycelten Material in einer Menge unter oder gleich einem maximalen Schwellenwert vorliegen, wobei der maximale Schwellenwert für Blei 60 ppm beträgt und/oder der maximale Schwellenwert für Cadmium 20 ppm beträgt und/oder der maximale Schwellenwert für Quecksilber 0,5 ppm beträgt und/oder der maximale Schwellenwert für sechswertiges Chrom 20 ppm beträgt und/oder der maximale Schwellenwert für Brom 60 ppm beträgt und/oder der maximale Schwellenwert für Antimon 50 ppm beträgt und/oder der maximale Schwellenwert für Arsen 50 ppm beträgt.

9. Verfahren nach einem der vorstehenden Ansprüche, **dadurch gekennzeichnet, dass** das recycelte Material von Styrolpolymeren abgeleitet ist, wobei das eine oder die mehreren chemischen Elemente in dem recycelten Material in einer Menge unter oder gleich einem maximalen Schwellenwert festgestellt werden können, wobei der maximale Schwellenwert für Blei 90 ppm beträgt und/oder der maximale Schwellenwert für Cadmium 40 ppm beträgt und/oder der maximale Schwellenwert für Quecksilber 10 ppm beträgt und/oder der maximale Schwellenwert für sechswertiges Chrom 100 ppm beträgt und/oder der maximale Schwellenwert für Brom 100 ppm beträgt und/oder der maximale Schwellenwert für Antimon 200 ppm beträgt und/oder der maximale Schwellenwert für Arsen 200 ppm beträgt.

10. Komponente (1; 101, 104; 204; 301: 401; 501) für ein wasserführendes Gerät, die durch ein Verfahren nach einem der vorstehenden Ansprüche erhältlich ist.

11. Komponente (1; 101, 104; 204; 301: 401; 501) nach Anspruch 10, **dadurch gekennzeichnet, dass** die Komponente (1; 101, 104; 204; 301: 401; 501) eines der Folgenden ist: eine Wanne (1) des wasserführenden Geräts, eine Gehäusekomponente des wasserführenden Geräts, eine Bedienfeld (101) des wasserführenden Geräts.

## Revendications

1. Procédé de production d'un composant (1; 101, 104 ; 204 ; 301 ; 401 ; 501) pour un appareil contenant de l'eau, comprenant les étapes suivantes :
- injection depuis au moins un point d'injection (60 ; 160) d'un premier matériau polymère non recyclé (20) à l'intérieur d'une cavité (56 ; 156) d'un moule (50 ; 150) pendant un premier temps de telle sorte que ledit premier matériau polymère non recyclé (20) atteint des surfaces internes dudit moule (50 ; 150) et se solidifie au moins partiellement pour former une couche solidifiée externe (Le) ;
- injection depuis ledit au moins un point d'injection (60 ; 160), après ledit premier temps, d'un deuxième matériau polymère recyclé (22) à l'intérieur dudit moule (50 ; 150) pendant un deuxième temps de telle sorte que ledit deuxième matériau polymère recyclé (22) remplit le cœur de ladite cavité (56 ; 156) et pousse le premier matériau polymère non recyclé (20) non encore solidifié ;
**caractérisé en ce que**
ledit matériau recyclé comprend un matériau polymère comprenant un ou plusieurs éléments chimiques du groupe comprenant les éléments chimiques suivants : plomb ; cadmium ; mercure ; chrome hexavalent ; brome ; antimoine ; arsenic ; dans lequel ledit ou lesdits éléments chimiques sont dans une quantité à l'intérieur dudit matériau recyclé supérieure ou égale à un seuil minimal, dans lequel ledit seuil minimal pour le plomb est de 7 ppm et/ou ledit seuil minimal pour le cadmium est de 5 ppm et/ou ledit seuil minimal pour le mercure est de 0,01 ppm et/ou ledit seuil minimal pour le chrome hexavalent est de 10 ppm et/ou ledit seuil minimal pour le brome est de 5 ppm et/ou ledit seuil minimal pour l'antimoine est de 5 ppm et/ou ledit seuil minimal pour l'arsenic est de 5 ppm ;
dans lequel ledit matériau recyclé provient de polymères polyoléfiniques, dans lequel ledit ou lesdits éléments chimiques sont dans une quantité à l'intérieur dudit matériau recyclé inférieure ou égale à un seuil maximal, dans lequel ledit seuil maximal pour le plomb est de 90 ppm et/ou ledit seuil maximal pour le cadmium est de 40 ppm et/ou ledit seuil maximal pour le mercure est de 10 ppm et/ou ledit seuil maximal pour le chrome hexavalent est de 100 ppm et/ou ledit seuil maximal pour le brome est de 100 ppm et/ou ledit seuil maximal pour l'antimoine est de 100 ppm et/ou ledit seuil maximal pour l'arsenic est de 100 ppm, ou
dans lequel ledit matériau recyclé provient de polymères styréniques, dans lequel ledit ou lesdits éléments chimiques sont dans une quantité à l'intérieur dudit matériau recyclé inférieure ou égale à un seuil maximal, dans lequel ledit seuil maximal pour le plomb est de 100 ppm et/ou ledit seuil maximal pour le cadmium est de 50 ppm et/ou ledit seuil maximal pour le mercure est de 10 ppm et/ou ledit seuil maximal pour le chrome hexavalent est de 200 ppm et/ou ledit seuil maximal pour le brome est de 200 ppm et/ou ledit seuil maximal pour l'antimoine est de 300 ppm et/ou ledit seuil maximal pour l'arsenic est de 800 ppm.

2. Procédé selon la revendication 1, **caractérisé en ce que** ledit deuxième matériau polymère recyclé (22) pousse ledit premier matériau polymère non recyclé (20) non encore solidifié de telle sorte que ledit premier matériau polymère non recyclé (20) atteint toutes les surfaces internes restantes dudit moule (50 ; 150) où il se solidifie au moins partiellement et forme une couche solidifiée externe (Le).

3. Procédé selon la revendication 1, **caractérisé en ce que** ledit deuxième matériau polymère recyclé (22) pousse ledit premier matériau polymère non recyclé (20) non encore solidifié de telle sorte que ledit premier matériau polymère non recyclé (20) atteint certaines surfaces internes restantes dudit moule (50 ; 150) où il se solidifie au moins partiellement et forme une couche solidifiée externe (Le) et de telle sorte que ledit deuxième matériau polymère recyclé (22) atteint toutes les surfaces internes restantes dudit moule (50 ; 150) où il se solidifie au moins partiellement et forme une couche solidifiée externe (Le).

4. Procédé selon la revendication 1 ou 2, **caractérisé en ce que** ledit premier temps d'injection est réglé de telle sorte que ledit premier matériau polymère non recyclé (20) atteint toutes les surfaces internes dudit moule (50 ; 150).

5. Procédé selon l'une quelconque des revendications précédentes, **caractérisé en ce que** ledit premier matériau polymère non recyclé (20) et/ou ledit deuxième matériau polymère recyclé (22) comprennent des polymères.

6. Procédé selon l'une quelconque des revendications précédentes, **caractérisé en ce que** ledit premier matériau polymère non recyclé (20) et/ou ledit deuxième matériau polymère recyclé (22) comprennent un matériau thermoplastique.

7. Procédé selon l'une quelconque des revendications précédentes, **caractérisé en ce que** ledit matériau recyclé provient de plastique post-consommation et/ou de matériaux plastiques post-industriels.

8. Procédé selon l'une quelconque des revendications précédentes, **caractérisé en ce que** ledit matériau recyclé provient de polymères polyoléfiniques, dans lequel ledit ou lesdits éléments chimiques peuvent se trouver dans une quantité à l'intérieur dudit matériau recyclé inférieure ou égale à un seuil maximal, dans lequel ledit seuil maximal pour le plomb est de 60 ppm et/ou ledit seuil maximal pour le cadmium est de 20 ppm et/ou ledit seuil maximal pour le mercure est de 0,5 ppm et/ou ledit seuil maximal pour le chrome hexavalent est de 20 ppm et/ou ledit seuil maximal pour le brome est de 60 ppm et/ou ledit seuil maximal pour l'antimoine est de 50 ppm et/ou ledit seuil maximal pour l'arsenic est de 50 ppm.

9. Procédé selon l'une quelconque des revendications précédentes, **caractérisé en ce que** ledit matériau recyclé provient de polymères styréniques, dans lequel ledit ou lesdits éléments chimiques peuvent se trouver dans une quantité à l'intérieur dudit matériau recyclé inférieure ou égale à un seuil maximal, dans lequel ledit seuil maximal pour le plomb est de 90 ppm et/ou ledit seuil maximal pour le cadmium est de 40 ppm et/ou ledit seuil maximal pour le mercure est de 10 ppm et/ou ledit seuil maximal pour le chrome hexavalent est de 100 ppm et/ou ledit seuil maximal pour le brome est de 100 ppm et/ou ledit seuil maximal pour l'antimoine est de 200 ppm et/ou ledit seuil maximal pour l'arsenic est de 200 ppm.

10. Composant (1 ; 101, 104 ; 204 ; 301 ; 401 ; 501) pour un appareil contenant de l'eau obtenu par un procédé selon l'une quelconque des revendications précédentes.

11. Composant (1 ; 101, 104 ; 204 ; 301 ; 401 ; 501) selon la revendication 10, **caractérisé en ce que** ledit composant (1 ; 101, 104 ; 204 ; 301 ; 401 ; 501) en est un parmi : une cuve (1) dudit appareil contenant de l'eau, un composant de carcasse dudit appareil contenant de l'eau, un panneau de commande (101) dudit appareil contenant de l'eau.
